(19) Europäisches Patentamt
European Patent Office
Office européen des brevets

(11) **EP 3 000 001 B1**

(12) **FASCICULE DE BREVET EUROPEEN**

(45) Date de publication et mention de la délivrance du brevet:
**14.08.2019 Bulletin 2019/33**

(21) Numéro de dépôt: **14729697.4**

(22) Date de dépôt: **20.05.2014**

(51) Int Cl.:
***G05B 19/4097*** *(2006.01)*    ***B29C 70/30*** *(2006.01)*

(86) Numéro de dépôt international:
**PCT/FR2014/000110**

(87) Numéro de publication internationale:
**WO 2014/188086 (27.11.2014 Gazette 2014/48)**

(54) **PROCEDE DE DEFINITION DE TRAJECTOIRES DE FIBRE A PARTIR D'UN CHAMP VECTORIEL**

VERFAHREN ZUM DEFINIEREN VON FASERTRAJEKTORIEN AUF DER BASIS EINES VEKTORFELDES

METHOD FOR DEFINING FIBRE TRAJECTORIES ON THE BASIS OF A VECTOR FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2013 FR 1301168**

(43) Date de publication de la demande:
**30.03.2016 Bulletin 2016/13**

(73) Titulaire: **Coriolis Composites**
**56530 Queven (FR)**

(72) Inventeurs:
• **MUNAUX Olivier**
**56270 Ploemeur (FR)**
• **CHALLOIS Frédéric**
**56100 Lorient (FR)**

(56) Documents cités:
**US-A- 5 041 179**

**Description**

La présente invention concerne la fabrication de pièces en matériau composite par des machines de drapage de fibres automatiques, et plus particulièrement un procédé de définition des trajectoires de fibre sur une surface de drapage pour machines de drapage automatique.

Il est connu de réaliser des pièces en matériau composite par des procédés dits de placement de fibres, en superposant plusieurs plis de fibres dans des directions différentes. Dans la présente, l'expression « placement de fibres » désigne le placement de mèches, dans lequel chaque pli est réalisé par dépose au contact sur un moule de bandes les unes à côté des autres, chaque bande étant formée de plusieurs mèches indépendantes disposées côté à côte, ainsi que le placement de bandes dans lequel chaque pli est réalisé par dépose au contact sur un moule de bandes les unes à côté des autres, chaque bande étant formée d'une seule mèche, de largeur plus importante que dans le cas de placement de mèches. Les mèches classiquement utilisées sont unidirectionnelles et comprennent une multitude de filaments. Les fibres déposées peuvent être pré-imprégnées de résine ou non. La technologie de placement de mèches, utilisant des mèches de plus faible largeur, permet de draper sur des surfaces de drapage de formes complexes. Les pièces sont fabriquées par des machines de placement automatiques, auxquelles il convient de fournir les trajectoires de fibres pour réaliser les plis. Dans le cas de placement de mèches, ces machines sont classiquement appelées machines de placement de fibres ou machines AFP (Automated Fiber Placement), et machines de placement de bandes ou machines ATP (Automated Tape Placement) dans le cas de placement de bandes.

Les trajectoires de fibre sont classiquement définies par logiciel au moyen d'une rosette, constituée d'un système d'axes associé à une méthode de transfert, qui permet de définir une direction de fibre en tout point d'une surface. Il existe aujourd'hui différentes rosettes, basées sur des méthodes de transfert différentes, qui sont reconnues et utilisées dans le secteur aéronautique en fonction de la surface de drapage, telles que par exemple la rosette cartésienne ou la rosette translation.

Chaque trajectoire est générée en définissant la direction de la trajectoire en différents points d'analyse de la surface de drapage, appelés également points de propagation, par transfert du système d'axes audit point d'analyse selon la méthode de transfert associée. Ces transferts du système d'axes pour les points de propagation nécessitent des temps de calcul qui peuvent s'avérer relativement longs, notamment dans le cas de surfaces complexes.

Les trajectoires obtenues sont ensuite classiquement soumises à une analyse de courbure, communément appelée analyse de « steering », et/ou une analyse de déviation angulaire. L'analyse de steering en un point d'analyse d'une trajectoire consiste à calculer la valeur du rayon de courbure moyen dans le plan tangent à la surface au point d'analyse.

Suivant ces résultats d'analyse, les trajectoires doivent être redéfinies manuellement pour adapter les trajectoires aux rayons de courbures minimaux acceptables ou réalisables avec une fibre donnée, et aux déviations angulaires maximales souhaitées par le concepteur de la pièce. De ce fait, la définition de trajectoires peut s'avérer longue et fastidieuse.

Dans le cas de surfaces de drapage non continues comprenant des renfoncements et/ou bossages, notamment pour la réalisation de renforts, le positionnement de renforts préfabriqués, le positionnement de nids d'abeille ou autres, la définition de trajectoires satisfaisantes au niveau de ces discontinuités s'avèrent compliquée, et nécessite de longues opérations manuelles.

US5041179A décrit un procédé pour contrôler la direction d' application d'une bande, de sorte que la bande suive une trajectoire géodésique. Le but de la présente invention est de proposer une solution visant à pallier au moins l'un des inconvénients précités.

A cet effet, la présente invention propose un procédé de définition de trajectoires de fibre sur une surface de drapage pour la réalisation d'au moins un pli d'orientation théorique donnée, pour la réalisation de pièces en matériau composite par drapage de fibres, caractérisé en ce qu'il comprend :

- la définition d'un maillage éléments finis de la surface de drapage,
- la définition de données de direction associées à au moins une méthode de transfert,
- la définition d'un champ vectoriel en associant à chaque maille du maillage, au moins un vecteur directeur obtenu par transfert desdites données de direction selon ladite méthode de transfert,

la trajectoire d'une fibre étant définie à partir dudit champ vectoriel.

Selon l'invention, les trajectoires des fibres sont obtenues à partir d'un champ vectoriel généré à partir des données de direction et de la méthode de transfert. L'utilisation d'un tel champ vectoriel permet d'améliorer le temps de calcul des trajectoires, le calcul des trajectoires à partir du champ vectoriel s'avérant effectivement plus rapide qu'un calcul des trajectoires directement à partir des données de direction et d'une méthode de transfert, par exemple à partir d'une rosette avec laquelle la courbe est générée en effectuant des projections à partir de la rosette globale pour obtenir les directions en différents points d'analyse. Selon l'invention, la direction en un point de propagation est obtenue directement en prenant le vecteur directeur de la maille à laquelle appartient le point d'analyse.

En outre les vecteurs directeurs selon l'invention permettent une prévisualisation des résultats, et ainsi une validation de la stratégie retenue avant de générer les trajectoires. Le champ vectoriel peut en outre être réinjecté en entrée d'une nouvelle étape de traitement afin modifier les vecteurs directeurs, par exemple pour tenir compte de contraintes de conception et/ou de fabrication.

Le procédé selon l'invention peut être mis en oeuvre de manière automatique sous la forme d'un logiciel. Le procédé selon l'invention peut être utilisé pour la réalisation de pièces en matériau composite par drapage de fibres, que ce soit par drapage au contact, tel que par placement de mèches ou par placement de bandes, ou par drapage sans contact tel que par enroulement filamentaire. Le procédé selon l'invention présente un intérêt tout particulier dans le cas de placement de mèches sur des surfaces de drapage non planes.

Selon un mode de réalisation, les données de direction associées à une méthode de transfert sont constituées d'une rosette classique ou d'une combinaison de rosettes classiques.

Selon un autre mode de réalisation, la définition de données de direction comprend la définition de courbes de contraintes à partir de la définition de la surface de drapage, et/ou la définition d'au moins une grille de contraintes, à partir de la définition de la surface de drapage, avec association à chaque noeud de la grille de contraintes d'au moins un vecteur de contrainte, les courbes de contraintes et les vecteurs de contrainte étant représentatifs de contraintes géométriques, de contraintes de rayon de courbure géodésique, de contraintes de déviation angulaire et/ou de contraintes d'efforts, le vecteur directeur d'une maille étant obtenu par calcul des poids normalisés de vecteurs de contrainte desdites courbes de contraintes et/ou par calcul des poids normalisés de vecteurs de contrainte de ladite grille de contraintes, et par pondération par lesdits poids normalisés desdits vecteurs de contrainte. Selon ce mode de réalisation, la définition des trajectoires est réalisée à partir de données de directions tenant compte de contraintes de fabrication et/ou de conception, ces contraintes étant modélisées sous la forme de courbes de contraintes ou de vecteurs de contrainte associés aux noeuds d'une grille de contraintes, la direction en un point d'analyse étant définie en appliquant une loi de pondération aux vecteurs de contrainte associés audit point d'analyse et issus desdites courbes de contraintes et/ou d'une grille de contrainte. Le procédé selon l'invention permet d'intégrer dès la définition des trajectoires, des contraintes de conception et/ou de fabrication, réduisant ainsi le temps de définition des trajectoires.

Les données de directions comprennent dans ce cas les courbes de contraintes et/ou la grille de contraintes, la méthode de transfert comprenant une méthode de pondération de vecteurs de contrainte desdites courbes et/ou de ladite grille.

Selon un mode de réalisation, dans le cas d'une grille de contrainte, le procédé comprend la définition d'une grille de contraintes, chaque maille de ladite grille de contraintes étant de préférence définie par quatre noeuds, et l'association à chaque noeud de la grille de contraintes d'au moins un vecteur de contrainte, le vecteur directeur d'une maille étant obtenu par

- définition d'un point projeté obtenu par projection normale d'un point d'analyse de la maille, par exemple le point central de la maille, sur la grille de contrainte,
- calcul des poids normalisés au point projeté des quatre noeuds,
- pondération des quatre vecteurs de contrainte par lesdits poids normalisés pour obtenir un vecteur au point projeté, et obtention du vecteur directeur par projection normale de ce vecteur au point d'analyse.

Dans ce mode de réalisation, les données de direction comprennent la grille de contraintes, la méthode de transfert comprenant des projections normales et une méthode de pondération de vecteurs de contrainte desdites courbes de contraintes et/ou de ladite grille de contraintes.

Selon un mode de réalisation, les vecteurs de contrainte de la grille de contraintes sont représentatifs de contrainte géométriques de la surface de drapage.

Selon un mode de réalisation, dans le cas de courbes de contraintes, le procédé comprend la définition d'au moins deux courbes de contraintes de préférence sur le maillage de la surface de drapage, le vecteur directeur d'une maille étant obtenu par

- projection normale d'un point d'analyse de ladite maille, par exemple le point central de la maille, sur les deux courbes de contraintes entre lesquelles ledit point d'analyse est positionné,
- définition auxdits points projetés de vecteurs de contrainte tangents auxdites courbes de contraintes,
- calcul des poids normalisés des points projetés au point d'analyse,
- et pondération des deux vecteurs de contrainte par leurs poids normalisés respectifs pour obtenir le vecteur directeur de la maille.

Selon un mode de réalisation, les courbes de contraintes sont représentatives de contraintes géométriques de la surface de drapage.

**EP 3 000 001 B1**

Selon un autre mode de réalisation, les courbes de contraintes sont représentatives de valeurs de déviation angulaire maximale, et sont obtenues à partir d'une grille dite de déviation angulaire, et de directions de référence. Ces directions de référence sont par exemple obtenues à partir d'une rosette classique, d'une grille de contraintes ou de courbes de contraintes, la grille de déviation angulaire servant à réorienter ces directions de référence dans des limites de déviation angulaire afin de se rapprocher des géodésiques et ainsi de limiter le rayon de courbure des fibres. Dans ce mode de réalisation, le procédé selon l'invention comprend la définition d'une grille de déviation angulaire, chaque maille de ladite grille de déviation angulaire étant de préférence définie par quatre noeuds, et l'association à chaque noeud de la grille de déviation angulaire d'au moins une valeur de déviation angulaire maximale, la définition d'une courbe de contraintes comprenant la définition de directions de propagation en différents points d'analyse de la surface de drapage, la définition d'une direction de propagation en un point d'analyse comprenant :

- l'obtention d'une première direction de référence audit point d'analyse du maillage de la surface de drapage à partir de données de direction associées à une méthode de transfert,
- projection normale dudit point sur la grille de déviation angulaire,
- calcul des poids normalisés au point projeté des quatre noeuds de la maille de la grille de déviation angulaire,
- pondération desdites quatre valeurs de déviation angulaire maximale de la maille par lesdits poids normalisés pour obtenir une valeur de déviation angulaire maximale associée audit point d'analyse,
- réorientation de ladite de première direction de référence à partir de ladite valeur de déviation angulaire maximale pour obtenir la direction de propagation audit point d'analyse.

Selon un mode de réalisation, ladite étape de réorientation de la direction de référence comprend

- la définition d'un secteur de tolérance autour de la première direction de référence en définissant des directions limites à un angle de plus ou moins la valeur de déviation angulaire maximale associée audit point d'analyse,
- la détermination d'une direction géodésique audit point d'analyse,
- la direction de propagation au point de propagation est égale à la direction géodésique si la direction géodésique est incluse dans le secteur de tolérance, et est égale à la direction limite la plus proche de la direction géodésique, si la direction géodésique n'est pas incluse dans le secteur de tolérance.

Selon un mode de réalisation, le procédé comprend la définition d'un maillage de transfert élément finis d'une surface de transfert correspondant à une surface simplifiée, sensiblement continue, de la surface de drapage, le vecteur directeur de chaque maille étant obtenue par

- définition d'un point projeté obtenu par projection normale d'un point d'analyse de ladite maille, par exemple du point central, sur le maillage de transfert,
- définition d'une deuxième direction de référence audit point projeté, à partir de données de direction associées à une méthode de transfert ;
- définition de la normale à la maille de transfert ;
- définition d'un plan de coupe ledit plan de coupe étant défini par le point projeté, ladite deuxième direction de référence et ladite normale,
- définition de la ligne d'intersection du plan de coupe avec le plan de la maille, le vecteur directeur de la maille étant obtenu à partir de la direction de cette ligne d'intersection.

L'utilisation d'une telle surface de transfert simplifiée pour le transfert de données de direction s'avère particulièrement efficace pour définir des trajectoires acceptables en terme de rayon de courbure et de déviation angulaire dans le cas de surfaces de drapage non continues, présentant des renfoncements et/ou des bossages générant des rampes.

Dans le cas de l'utilisation d'une grille de déviation angulaire en combinaison avec une grille de contraintes, la première direction de référence au point d'analyse est obtenue à partir d'une grille de contraintes par

- définition d'un point projeté par projection normale dudit point d'analyse, sur la grille de contrainte,
- calcul des poids normalisés au point projeté des quatre noeuds,
- pondération des quatre vecteurs de contrainte par lesdits poids normalisés pour obtenir un vecteur audit point projeté, la première direction de référence étant obtenue par projection dudit vecteur au point d'analyse.

Dans le cas de l'utilisation d'une surface de transfert en combinaison avec une grille de déviation angulaire, la première direction de référence au point d'analyse est obtenue à partir d'une surface de transfert, par

4

- définition d'un point projeté par projection normale du point d'analyse de ladite maille, sur le maillage de transfert,
- définition d'une deuxième direction de référence audit point projeté,
- définition de la normale à la maille de transfert,
- définition d'un plan de coupe ledit plan de coupe étant défini par le point projeté, ladite deuxième direction de référence et ladite normale,
- définition de la ligne d'intersection du plan de coupe avec le plan de la maille, la première direction de référence correspondant à la direction de cette ligne d'intersection.

Dans le cas de l'utilisation d'une surface de transfert en combinaison avec une grille de contraintes et éventuellement une grille de déviation angulaire, la deuxième direction de référence audit point projeté est obtenue à partir d'une grille de contraintes par

- définition d'un deuxième point projeté par projection normale du point projeté de la maille de transfert, sur la grille de contrainte,
- calcul des poids normalisés au deuxième point projeté de la maille de la grille de contraintes des quatre noeuds de ladite maille,
- pondération des quatre vecteurs de contrainte par lesdits poids normalisés pour obtenir un vecteur audit deuxième point projeté, la deuxième direction de référence étant obtenue par projection dudit vecteur au point projeté de la maille de transfert.

Dans le cas de l'utilisation d'une grille de déviation angulaire en combinaison avec des courbes de contraintes, obtenues par exemple à partir de contraintes géométriques, la première direction de référence au point d'analyse est obtenue à partir d'une grille de contraintes par

- projection normale du point d'analyse sur les deux courbes de contraintes entre lesquelles ledit point d'analyse est positionné,
- définition auxdits points projetés de vecteurs de contrainte tangents auxdites courbes de contraintes,
- calcul des poids normalisés des points projetés au point d'analyse;
- et pondération des deux vecteurs de contrainte par leurs poids normalisés respectifs pour obtenir un vecteur qui correspond à ladite première direction de référence.

Dans le cas de l'utilisation d'une surface de transfert en combinaison avec des courbes de contraintes, obtenues par exemple à partir de contraintes géométriques, et éventuellement une grille de déviation angulaire, la deuxième direction de référence audit point projeté est obtenue à partir d'une grille de contraintes par

- définition de seconds points projetés par projection normale dudit point projeté de la maille de transfert sur les deux courbes de contraintes entre lesquelles ledit point projeté est positionné,
- définition auxdits seconds points projetés de vecteurs de contrainte tangents auxdites courbes de contraintes,
- calcul des poids normalisés des seconds points projetés des courbes de contraintes au point projeté ;
- pondération des deux vecteurs de contrainte par leurs poids normalisés respectifs pour obtenir un vecteur, la deuxième direction de référence correspondant audit vecteur.

Suivant la surface de drapage, des courbes de contraintes et/ou une grille de contraintes définies pour une orientation de pli peuvent être utilisées pour les autres orientations. Dans ce cas, une fois les directions de fibres définies pour une première orientation de pli, par exemple 0°, les directions des fibres pour les autres orientations de plis, par exemple, 90°, +/- 45°, sont obtenues par simple rotation, par exemple par simple rotation des vecteurs directeurs du champ vectoriel obtenu pour la première direction.

Des courbes de contraintes et/ou une grille de contraintes différentes peuvent être définies suivant les différentes orientations de plis. Dans ce cas, l'utilisation de champ vectoriel permet d'effectuer aisément des analyses de cisaillement afin de vérifier que les angles entre les fibres de plis d'orientation différentes sont acceptables, et ainsi valider les champs vectoriels obtenus.

Selon un mode de réalisation, le procédé comprend l'obtention d'au moins deux champs vectoriels pour des orientations de plis différentes, obtenus à partir de données de directions différentes, spécifiques à chaque orientation, le procédé comprenant en outre une analyse de cisaillement par comparaison des vecteurs directeurs des deux champs vectoriels.

La présente invention a également pour objet un procédé de fabrication de pièces en matériau composite par une machine de drapage de fibres automatique, caractérisé en ce que les trajectoires de fibres pour le drapage de plis par la machine de drapage sont définies par le procédé de définition de trajectoire décrit précédemment.

La présente invention a également pour objet un programme d'ordinateur comportant un ensemble d'instructions aptes à mettre en oeuvre le procédé de définition de trajectoire tel que décrit précédemment, lorsque ledit programme est exécuté sur un ordinateur.

L'invention sera mieux comprise, et d'autres buts, détails, caractéristiques et avantages apparaîtront plus clairement au cours de la description explicative détaillée qui va suivre de plusieurs modes de réalisation particuliers actuellement préférés de l'invention, en référence aux dessins schématiques annexés, sur lesquels :

- la figure 1 est un schéma général illustrant différents modes de réalisation du procédé selon l'invention ;
- la figure 2 est une vue en perspective d'un exemple de surface de drapage utilisée pour illustrer le procédé selon l'invention ;
- la figure 3 est un schéma illustrant un procédé de définition de trajectoires, selon premier mode de réalisation de l'invention, utilisant un champ vectoriel obtenu à partir d'une rosette classique ;
- la figure 4 est une vue en perspective du champ vectoriel obtenu selon le procédé de la figure 3 ;
- la figure 5 est une vue agrandie partielle de la figure 4 ;
- la figure 6A est une vue en perspective de trajectoires de fibre pour un pli à 0°, obtenues à partir du champ vectoriel de la figure 4, et la figure 6B est une analyse de rayon courbure desdites trajectoires ;
- la figure 7A est une vue en perspective des trajectoires de fibres pour un pli à 90°, obtenues à partir du champ vectoriel de la figure 4, et la figure 7B est une analyse de rayon de courbure desdites trajectoires ;
- la figure 8 est un schéma illustrant un procédé de définition de trajectoires, selon deuxième mode de réalisation de l'invention, utilisant un champ vectoriel obtenu à partir d'une grille de vecteurs de contrainte ;
- la figure 9 est une vue schématique en perspective de la grille de contraintes définie à partir de la surface de drapage ;
- la figure 10 est un schéma illustrant la méthode de définition du vecteur directeur d'une maille à partir d'un point projeté sur la grille de contraintes ;
- la figure 11 est une vue en perspective du champ vectoriel obtenu selon le procédé de la figure 8, avec la grille de contraintes de la figure 9, et la figure 12 est une vue agrandie partielle de la figure 11 ;
- la figure 13A est une vue en perspective des trajectoires de fibres pour un pli à 0° obtenues à partir du champ vectoriel de la figure 11, la figure 13B étant une analyse de rayon courbure desdites trajectoires ;
- la figure 14A est une vue en perspective des trajectoires de fibres pour un pli à 90° obtenues à partir du champ vectoriel de la figure 11, et la figure 14B est une analyse de rayon de courbure desdites trajectoires ;
- la figure 15 est un schéma illustrant un procédé de définition de trajectoires, selon troisième mode de réalisation de l'invention, utilisant un champ vectoriel obtenu à partir de courbes de contraintes ;
- la figure 16 est un schéma illustrant la méthode de définition d'un vecteur directeur du champ vectoriel à partir de courbes de contraintes ;
- la figure 17 est un schéma illustrant un procédé de définition de trajectoires, selon quatrième mode de réalisation de l'invention, utilisant un champ vectoriel obtenu à partir de courbes de contraintes, lesdites courbes de contraintes étant obtenues à partir d'une grille de déviation angulaire ;
- la figure 18 est une vue schématique en perspective de la grille de déviation angulaire définie à partir de la surface de drapage ;
- la figure 19 est un schéma illustrant la méthode pour générer les courbes de contraintes à partir de la grille de déviation angulaire de la figure 18 ;
- la figure 20 est une vue de courbes de contraintes générées à partir de la grille de déviation angulaire de la figure 18 et d'une rosette classique ;
- la figure 21 est un schéma illustrant la méthode pour définir le vecteur directeur d'une maille à partir des courbes de déviation angulaire ;
- la figure 22 est une vue partielle du champ de vecteur obtenu à partir de la grille de déviation angulaire ;
- la figure 23 est une analyse de rayon de courbure de trajectoires obtenues à partir du champ vectoriel de la figure 22 pour un pli à 90°;
- la figure 24 est un schéma illustrant un procédé de définition de trajectoires, selon un cinquième mode de réalisation de l'invention, utilisant un champ vectoriel obtenu à partir d'une surface de transfert ;
- la figure 25 est un schéma illustrant la méthode de définition d'un vecteur directeur du champ vectoriel à partir d'une surface de transfert ;
- la figure 26A est une vue en perspective de trajectoires de fibre obtenues avec une surface de transfert ;
- la figure 26B est une vue agrandie partielle de la figure 26A ;
- la figure 27 est une vue analogue à celle de la figure 26B, les trajectoires étant obtenues sans utilisation de la surface de transfert ;
- la figure 28 est un schéma de principe d'un procédé de définition de trajectoires, selon un autre mode de réalisation de l'invention, utilisant un champ vectoriel obtenu à partir d'une grille de déviation angulaire et d'une surface de transfert ;

- la figure 29 est un schéma illustrant la méthode de définition d'une direction de référence pour la définition d'une direction de propagation pour le procédé de la figure 28 ; et,

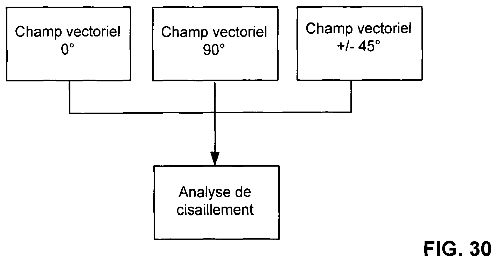

- la figure 30 est un schéma illustrant une étape d'analyse de cisaillement à partir de plusieurs champs vectoriels.

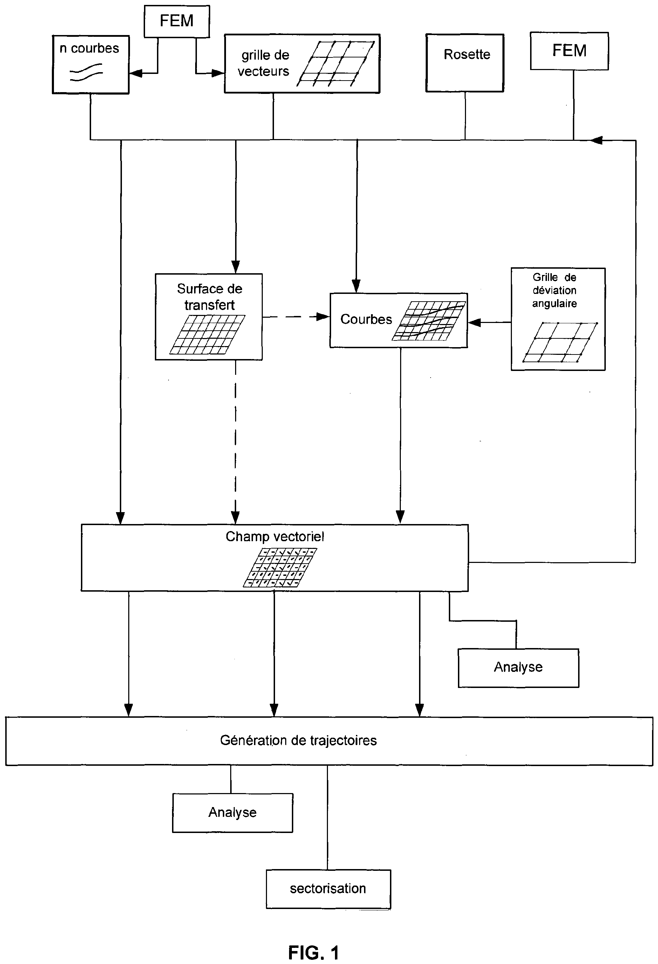

Selon l'invention, les trajectoires de fibres sont définies à partir d'un champ vectoriel constitué d'un maillage de la surface de drapage dans lequel un vecteur directeur est associé à chaque maille. Tel que représenté sur la figure 1, ce champ vectoriel peut être généré à partir de rosettes classiques, de courbes de contraintes et/ou d'une grille de contraintes, éventuellement en combinaison avec l'utilisation d'une surface de transfert et/ou de courbes de contraintes obtenues à partir d'une grille de déviation angulaire.

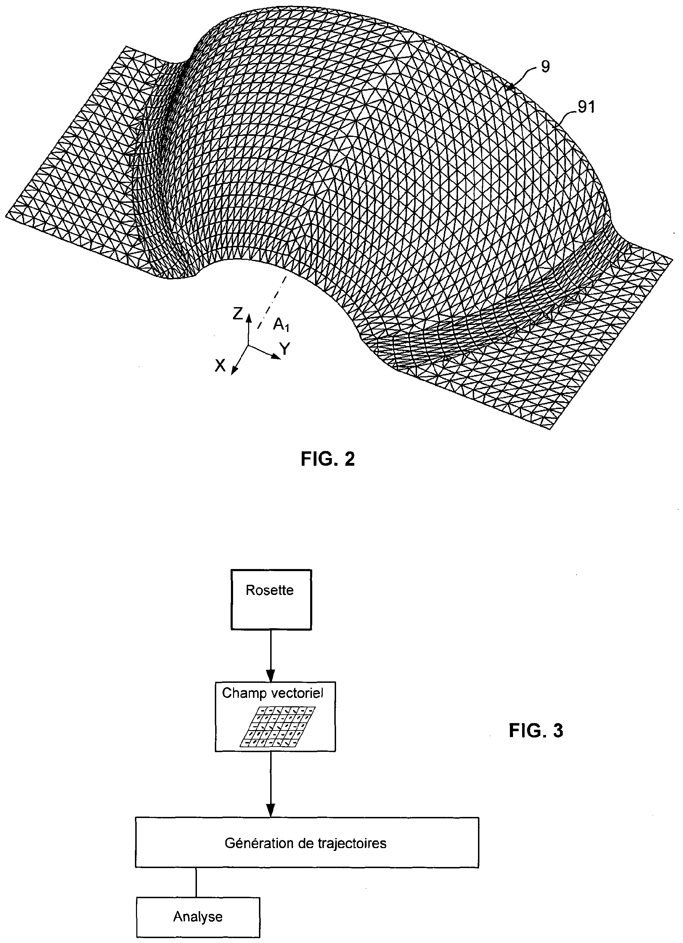

La figure 2 illustre une surface de drapage 9 utilisée à titre d'exemple pour illustrer différents modes de réalisation du procédé de définition de trajectoires de fibre selon l'invention. Cette surface de drapage est une surface à double courbure, et est définie par un maillage 91 éléments finis.

Selon un premier mode de réalisation, schématisé à la figure 3, le champ vectoriel est obtenu à partir d'une rosette classique, telle qu'une rosette cartésienne, comprenant un repère de référence défini par trois vecteurs orthogonaux X, Y, Z et une méthode de transfert cartésien. Dans le cas de la surface de drapage de la figure 2, le vecteur X de la rosette dite globale est aligné avec l'axe principal $A_1$ ou axe de révolution de la surface de drapage.

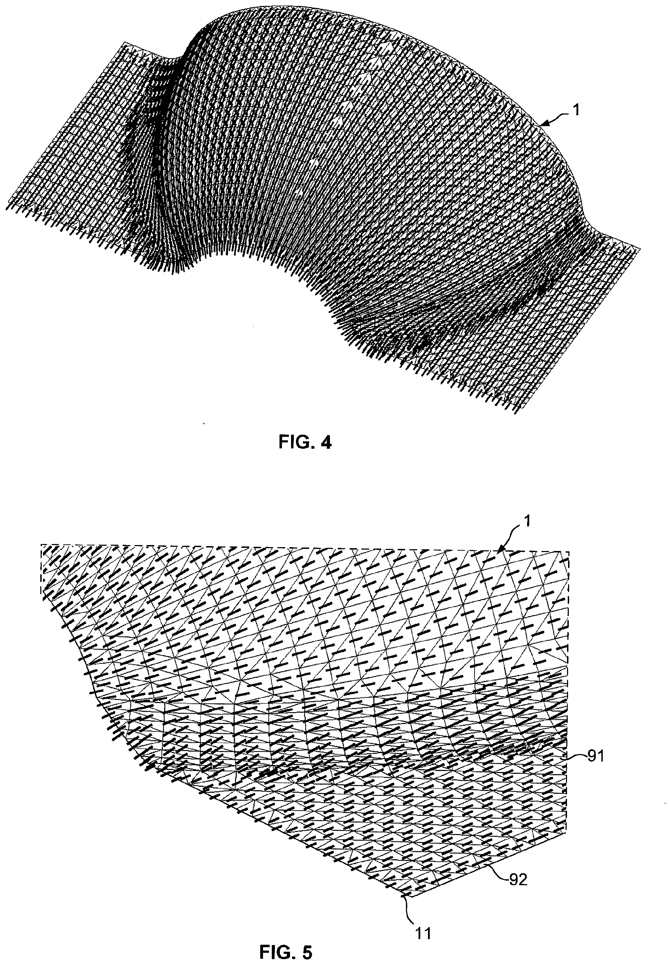

Le champ vectoriel est obtenu par transfert cartésien du vecteur X de la rosette globale sur chaque maille 92 du maillage, le transfert cartésien du vecteur X sur la maille consistant en une projection normale du vecteur X sur le plan de la maille concernée, le vecteur projeté de la rosette dite projetée constituant le vecteur directeur 11 de la maille. Les figures 4 et 5 illustrent le champ vectoriel 1 résultant.

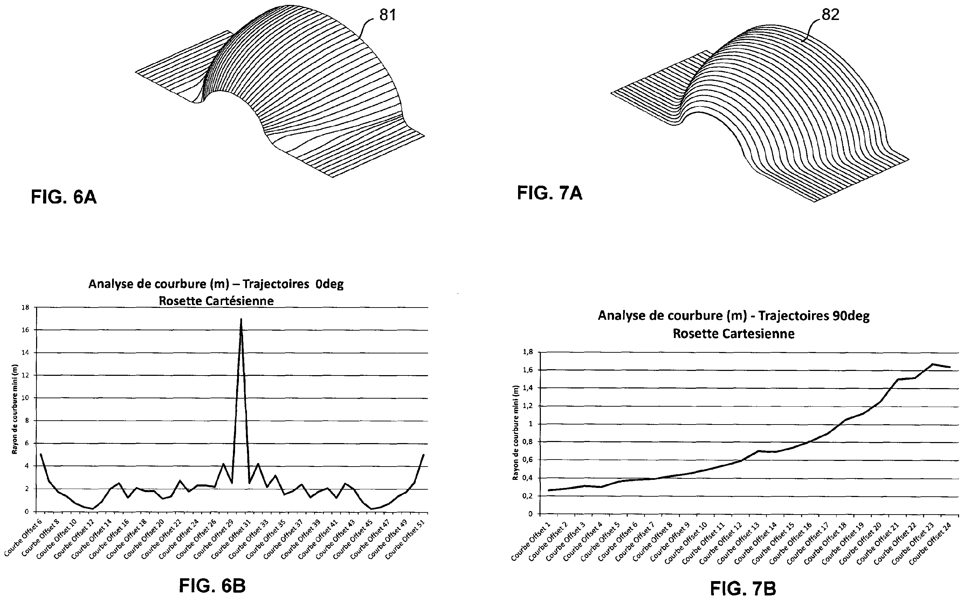

Des trajectoires 81 de fibre pour une orientation de pli à 0° peuvent ensuite être générées à partir de ce champ vectoriel 1, tel qu'illustré à la figure 6A. Chaque trajectoire est générée en définissant la direction de la trajectoire en différents points d'analyse, appelés également points de propagation, la direction en un point de propagation est celle du vecteur directeur de la maille à laquelle appartient ledit point de propagation.

Une analyse de rayon de courbure peut ensuite être effectuée sur ces trajectoires ainsi obtenues. La figure 6B illustre le rayon de courbure minimum de chaque trajectoire. Cette analyse de rayon de courbure montre des rayons de courbure importants, incompatibles par exemple avec le placement de mèches d'un quart de pouce de largeur, pour les lesquelles un rayon de courbure minimal d'environ 2 mètres est classiquement préconisé.

Une analyse de rayon de courbure et/ou de déviation angulaire peut être effectuée directement à partir du champ vectoriel, sans générer de trajectoires, cette analyse pouvant par exemple être visualisée sur le champ vectoriel en attribuant aux vecteurs des couleurs différentes en fonction des valeurs de rayon de courbure ou de déviation angulaire.

Des trajectoires de fibre pour d'autres orientations de pli, telles que 90°, +45° ou -45°, peuvent être générées à partir du même champ vectoriel 1, en effectuant une rotation correspondante des vecteurs directeurs. La figure 7A illustre des trajectoires de fibre pour une orientation de pli à 90°, obtenues en effectuant une rotation de 90° des vecteurs directeurs du champ vectoriel 1. La figure 7B illustre le rayon de courbure minimum de chaque trajectoire.

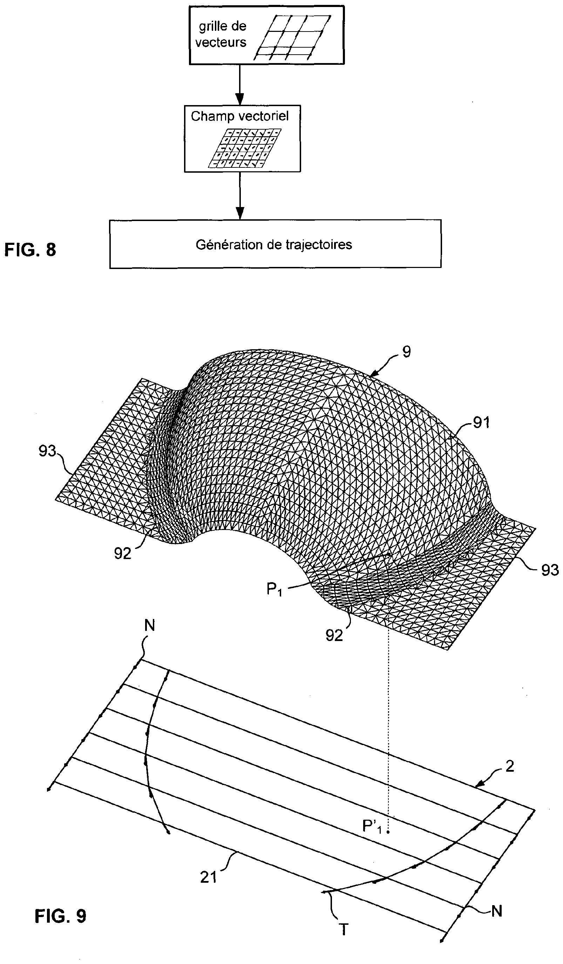

La figure 8 illustre un second mode de réalisation dans lequel le champ vectoriel est obtenu à partir d'une grille de contrainte, afin de prendre en compte des contraintes de conception et/ou de fabrication dans la définition des trajectoires, et ainsi obtenir des trajectoires avec des rayons de courbure acceptables.

En référence à la figure 9, on définit dans un premier temps une grille de contraintes 2, appelée également grille de vecteurs de contrainte. Dans cet exemple, la grille de contraintes est définie en fonction de contraintes géométriques de la surface de drapage, les contraintes géométriques étant ici les suivantes :

- les fibres de plis à 0° doivent suivre les génératrices 92 des rayons de raccordement entre la partie centrale globalement tronconique de la surface de drapage et les parties planes de part et d'autre de ladite partie tronconique, et
- les fibres de plis à 0° doivent être alignées avec les bords extérieurs 93 des parties planes.

Un maillage 21 est défini à partir de ces contraintes géométriques, chaque maille du maillage étant formée d'au moins quatre noeuds, puis un vecteur de contrainte T est assigné à chaque noeud N dudit maillage pour former la grille de contraintes 2.

Pour former le champ vectoriel, le vecteur directeur de chaque maille du maillage est défini de la manière suivante.

Tel qu'illustré à la figure 9, on effectue une projection normale du point central $P_1$ de la maille, au point le plus proche, sur la grille de contrainte.

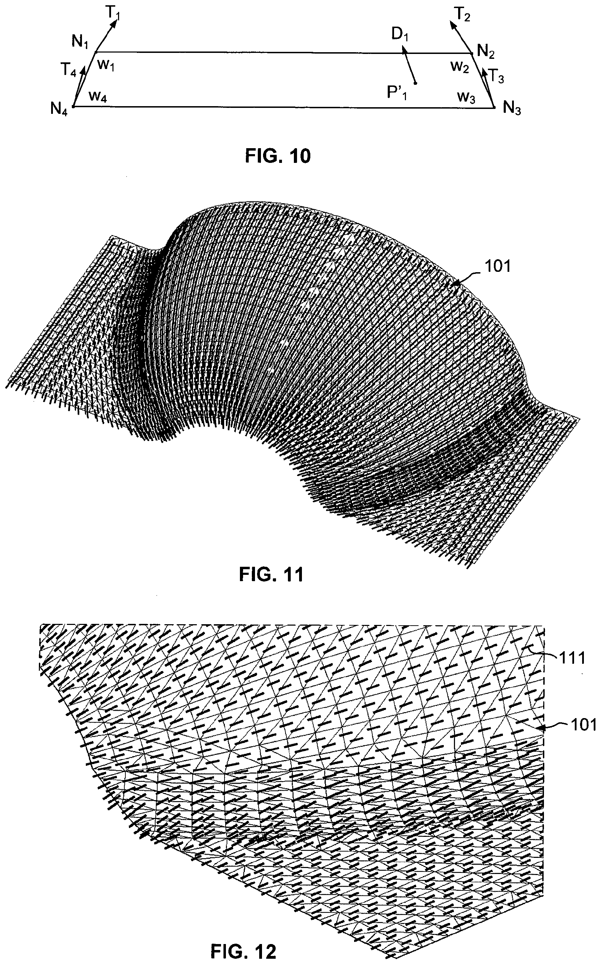

En référence à la figure 10, on effectue ensuite un calcul des poids normalisés $w_1$, $w_2$, $w_3$, $w_4$ au point projeté $P'_1$ des quatre noeuds $N_1$, $N_2$, $N_3$, $N_4$ qui sont associés audit point projeté, à savoir les quatre noeuds qui définissent la maille à laquelle ledit point projeté appartient. Ces poids normalisés, également appelés coordonnées barycentriques du point projeté, sont calculés selon une méthode connue en soi, en fonction de la distance entre ledit point projeté et lesdits noeuds. On détermine ensuite le vecteur $D_1$ au point projeté par pondération des quatre vecteurs $T_1$, $T_2$, $T_3$, $T_4$

par leurs poids normalisés respectifs $w_1$, $w_2$, $w_3$, $w_4$ :

$$D_1 = \| T_1 \times w_1 + T_2 \times w_2 + T_3 \times w_3 + T_4 \times w_4 \|$$

Le vecteur directeur de la maille est ensuite obtenu par un transfert par projection normale de ce vecteur $D_1$ au point central $P_1$ de la maille.

Les figures 11 et 12 illustrent le champ vectoriel 101 résultant, dans lequel un vecteur directeur 111 est associé à chaque maille.

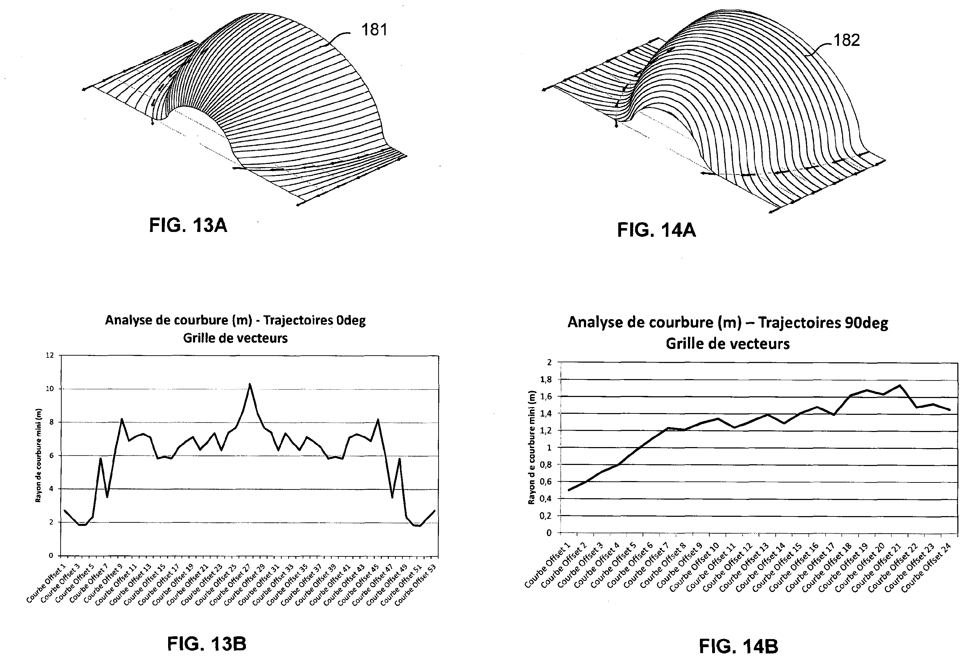

Les figures 13A et 13B illustrent respectivement les trajectoires 181 pour un pli à 0°, obtenues à partir de ce champ vectoriel, et les résultats de l'analyse de rayon de courbure correspondante. Les figures 14A et 14B illustrent respectivement les trajectoires 182 pour un pli à 90°, obtenues à partir de ce champ vectoriel, après une rotation de 90° des vecteurs directeurs, et les résultats de l'analyse de rayon de courbure correspondante. Des comparaisons des figures 6B et 7B avec respectivement les figures 13B et 14B montrent que les trajectoires obtenues avec la grille de contraintes présentent des rayons de courbure minimaux plus importants que ceux des trajectoires résultant d'une rosette cartésienne.

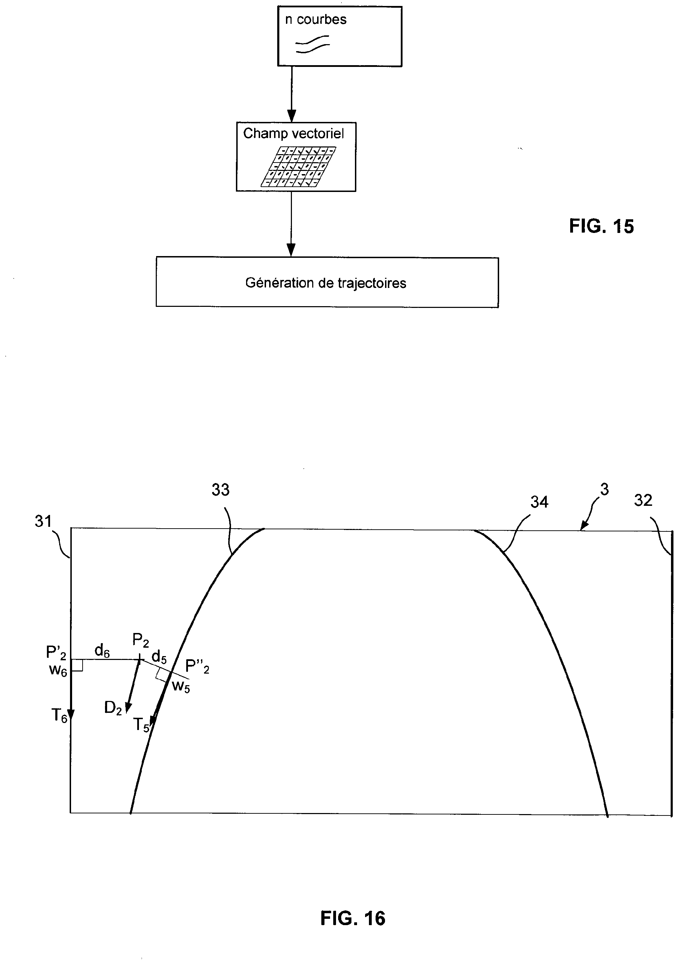

La figure 15 illustre un troisième mode de réalisation dans lequel le champ vectoriel est obtenu à partir de courbes de contraintes. Les contraintes géométriques représentées sous la forme de la grille de contraintes 2 dans le mode de réalisation précédent sont ici représentées sous la forme de courbes de contraintes.

En référence à la figure 16, les courbes de contraintes, désignées globalement sous la référence 3, comprennent :

- deux courbes de contraintes 31, 32 linéaires correspondant aux bords extérieurs 93 de la surface de drapage, et
- deux courbes de contraintes 33, 34 incurvées correspondant à des génératrices de rayons de raccordement entre la partie centrale et les parties latérales de la surface de drapage.

Pour former le champ vectoriel, le vecteur directeur de chaque maille du maillage est défini de la manière suivante.

Considérant le point central $P_2$ d'une maille sur la figure 16, on effectue une projection normale dudit point central $P_2$ sur les deux courbes de contraintes 31, 33 les plus proches, entre lesquelles ledit point central est positionné. On définit ensuite auxdits points projetés $P'_2$ $P''_2$ les deux vecteurs $T_5$, $T_6$ tangents aux courbes. On calcule les poids normalisés $w_5$, $w_6$, au point central $P_2$ des deux points projetés, ces poids normalisés étant fonction des distances $d_5$ et $d_6$ entre le point central et les points projetés :

$$w_5 = 1 - (d_5 / (d_5 + d_6))$$

$$w_6 = 1 - (d_6 / (d_5 + d_6))$$

On définit ensuite le vecteur $D_2$, qui correspond au vecteur directeur de la maille, en pondérant les deux vecteurs tangents $T_5$, $T_6$ par leurs poids normalisés respectifs $w_5$, $w_6$ :

$$D_2 = \| T_5 \times w_5 + T_6 \times w_6 \|$$

Le vecteur $D_2$ de la maille correspond au vecteur directeur $D_2$ ainsi obtenu. Le champ vectoriel obtenu à partir de ces courbes de contraintes 3 est similaire de celui 101 obtenu précédemment au moyen de la grille de contraintes.

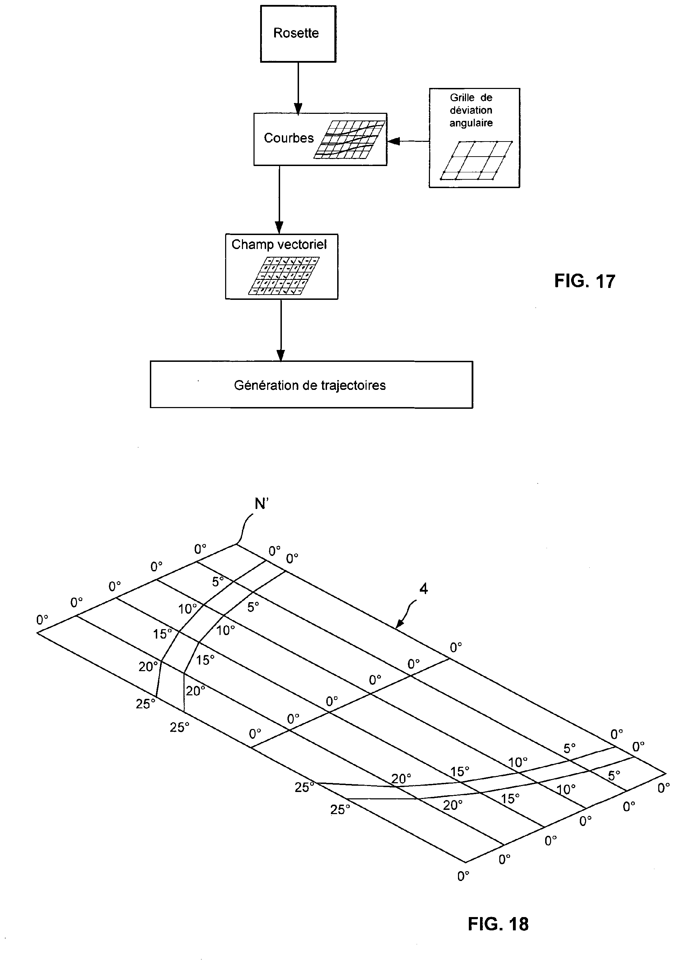

La figure 17 illustre un quatrième mode de réalisation dans lequel le champ vectoriel est obtenu à partir de courbes de contraintes qui sont définies à partir d'une grille de déviation angulaire.

En référence à la figure 18, on définit dans un premier temps une grille de déviation angulaire 4, dans laquelle chaque maille est définie par quatre noeuds N', et on assigne à chaque noeud de la grille une valeur de déviation angulaire maximale. Un exemple de valeurs de déviation assignées aux différents noeuds est donné à la figure 18.

Des courbes de contraintes sont générées sur la surface de drapage en définissant pour chaque courbe de contraintes des directions de propagation en différents points d'analyse appelés également points de propagation. La direction de propagation en un point de propagation $P_3$ est définie de la manière suivante.

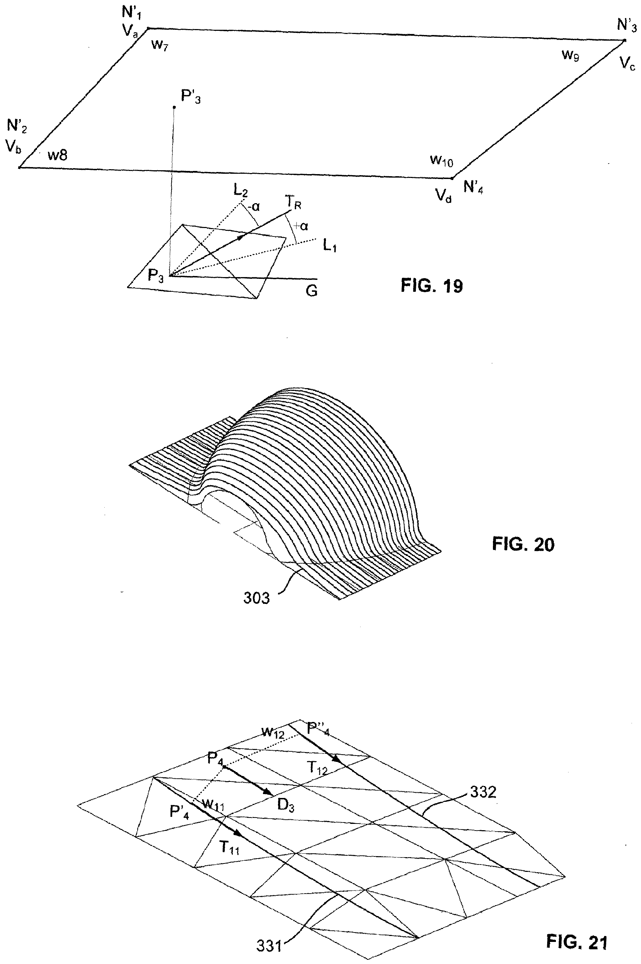

En référence à la figure 19, on définit une direction de référence audit point de propagation $P_3$, cette direction

de référence $T_R$ étant dans ce mode de réalisation une direction obtenue par une rosette cartésienne, par transfert par projection normale du vecteur X de la rosette globale sur le plan de la maille de la surface de drapage à laquelle appartient ledit point de propagation $P_3$.

On effectue ensuite une projection normale dudit point $P_3$ sur la grille de déviation angulaire, le point projeté $P'_3$ appartenant par exemple à la maille de la grille définie par les quatre noeuds $N'_1$, $N'_2$, $N'_3$, $N'_4$. On effectue un calcul des poids normalisés $w_7$, $w_8$, $w_9$, $w_{10}$ au point projeté $P'_3$ des quatre noeuds. Ces poids normalisés, également appelés coordonnées barycentriques du point projeté, sont calculés selon une méthode connue en soi, en fonction de la distance entre ledit point projeté et lesdits noeuds. On effectue une pondération des quatre valeurs de déviation angulaire maximale $V_a$, $V_b$, $V_c$, $V_d$ par lesdits poids normalisés pour obtenir une valeur de déviation angulaire maximale $\alpha$ autorisée associée audit point projeté :

$$\alpha = w_7 \times V_a + w_8 \times V_b + w_9 \times V_c + w_{10} \times V_d$$

On détermine ensuite un secteur de tolérance autour de la direction de référence $T_R$ en définissant des directions limites $L_1$ et $L_2$ à un angle de $+\alpha$ et $-\alpha$ autour de la direction de référence. On détermine par ailleurs une direction géodésique G correspondant à la direction de propagation audit point de propagation $P_3$ d'une courbe géodésique.

On effectue ensuite une réorientation de la direction de référence dans les limites de la valeur de déviation angulaire autorisée. Si la direction géodésique G est incluse dans le secteur de tolérance, alors la direction de propagation au point de propagation est définie comme étant la direction géodésique. Si la direction géodésique n'est pas incluse dans le secteur de tolérance, alors la direction de propagation au point de propagation est définie comme étant la direction limite $L_1$ ou $L_2$ la plus proche de la direction géodésique.

La figure 20 illustre un exemple de courbes de contraintes, désignées sous la référence générale 303, obtenues pour des plis à 90°, à partir d'une rosette cartésienne et de la grille de déviation angulaire, avec les valeurs de déviation angulaire indiquées sur la figure 18.

L'obtention d'un champ vectoriel est réalisée selon la méthode décrite précédemment avec les courbes de contraintes 3 de la figure 16. Le vecteur directeur de chaque maille du maillage est défini de la manière suivante. En référence à la figure 21, on effectue une projection normale du point central $P_4$ de la maille sur les deux courbes de contraintes 331, 332 les plus proches. On définit ensuite auxdits points projetés $P'_4$, $P''_4$ les deux vecteurs $T_{11}$, $T_{12}$ tangents aux courbes. On calcule les poids normalisés $W_{11}$, $W_{12}$, au point central P' des deux points projetés, ces poids normalisés étant fonction des distances entre le point central et les points projetés. On définit ensuite le vecteur $D_3$, de la maille, en pondérant les deux vecteurs tangents $T_{11}$, $T_{12}$ par leurs poids normalisés respectifs $W_{11}$, $W_{12}$ :

$$D_3 = \|w_{11} \times T_{11} + w_{12} \times T_{12}\|$$

Le vecteur directeur de la maille correspond audit vecteur $D_3$, de préférence après une rotation de 90° dudit vecteur $D_3$ pour avoir un champ vectoriel concernant par défaut les plis à 0°.

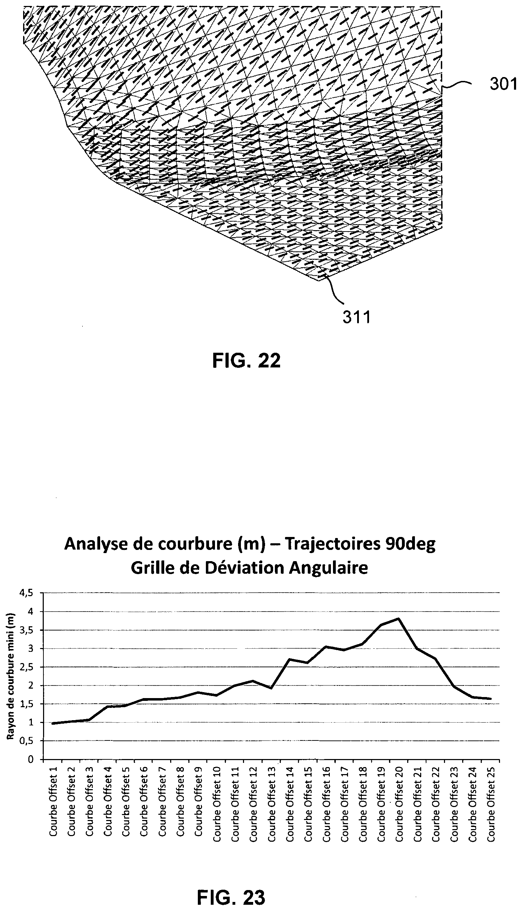

Le champ vectoriel 301 obtenu à partir de ces courbes de contraintes est illustré à la figure 22, le champ vectoriel comprenant un vecteur directeur 311 associé à chaque maille. Les résultats de l'analyse de rayon de courbure de trajectoires de fibres, obtenues à partir de ce champ vectoriel, ou correspondant aux courbes de contraintes 303 de la figure 20 sont illustrés à la figure 23. Ces résultats montrent une augmentation significative de rayons de courbure minimaux de trajectoires par rapport à ceux de trajectoires présentés à la figure 7B et obtenus simplement au moyen d'une rosette cartésienne.

Selon un autre mode de réalisation, le champ vectoriel est obtenu à partir d'une grille de vecteurs de contrainte et d'une grille de déviation angulaire. Dans ce cas, pour la génération des courbes de contraintes selon la méthode explicitée ci-dessus en référence à la figure 19, la définition de la direction de référence $T_R$ est réalisée, non pas à partir de la rosette cartésienne, mais à partir de la grille de vecteurs de contrainte, par projection normale du point $P_3$ sur la grille de contraintes et définition d'un vecteur $D_1$ selon la méthode de pondération explicitée précédemment en référence à la figure 10. La direction de référence $T_R$ de la maille est ensuite obtenue par un transfert par projection normale de ce vecteur $D_1$ au point $P_3$.

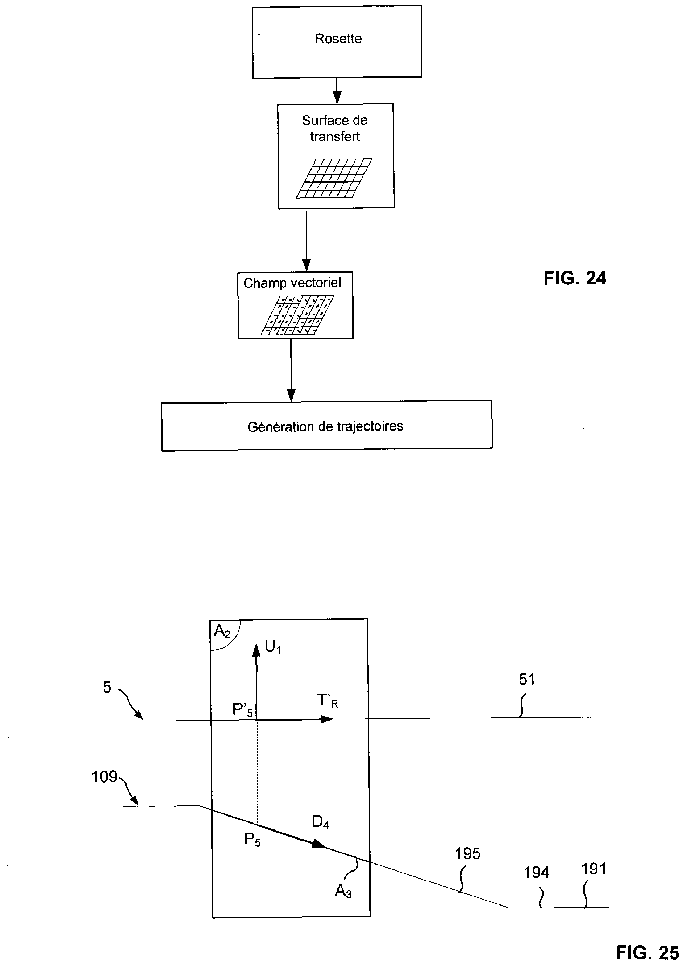

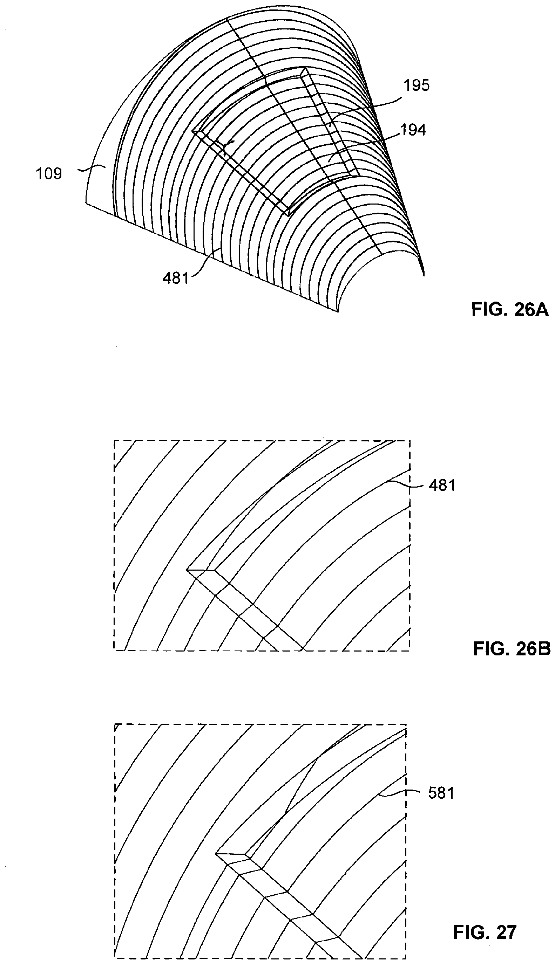

La figure 24 illustre un cinquième mode de réalisation dans lequel le champ vectoriel est obtenu en utilisant une surface de transfert pour le transfert d'une rosette cartésienne. Ce type de champ vectoriel est approprié pour la définition de trajectoires sur une surface de drapage non continue, telle que la surface de drapage 109 qu'illustrée à la figure 26A. Cette surface de drapage est de forme générale tronconique et comprend un renfoncement 194 central, formant des rampes 195.

On définit une surface dite de transfert continue qui correspond à une surface simplifiée de la surface de drapage. Dans le présent cas, la surface de transfert correspond à la surface de drapage sans son renfoncement central. Cette surface de transfert est définie par un maillage dit de transfert.

Pour former le champ vectoriel, le vecteur directeur de chaque maille du maillage 191 de la surface de drapage est défini de la manière suivante, en référence à la figure 25 :

- définition d'un point projeté $P'_5$ obtenu par projection normale du point central $P_5$ de ladite maille sur le maillage de transfert 51,
- définition d'une direction de référence $T'_R$ audit point projeté $P'_5$, ladite direction de référence provenant ici d'une rosette cartésienne et étant obtenue par transfert de l'axe X de la rosette sur le plan de la maille de transfert à laquelle appartient ledit point projeté $P'_5$ ;
- définition de la normale $U_1$ à la maille de transfert ;
- définition d'un plan de coupe $A_2$, ledit plan de coupe étant défini par le point projeté $P'_5$, ladite direction de référence $T'_R$ et ladite normale $U_1$, et
- définition de la ligne d'intersection $D_4$ du plan de coupe $A_2$ avec le plan $A_3$ de la maille à laquelle appartient le point central, le vecteur directeur de la maille correspondant à la direction de cette ligne d'intersection.

Les figures 26A et 26B illustrent des trajectoires 481 de plis à 90°, obtenues avec un tel champ vectoriel, après rotation de 90° des vecteurs directeurs. La figure 31 illustre les trajectoires 581 obtenues avec un champ vectoriel défini à partir d'un transfert de rosette directement sur la surface de drapage, sans utilisation de la surface de transfert.

Selon un autre mode de réalisation, le champ vectoriel est obtenu à partir d'une grille de vecteurs de contrainte et d'une surface de transfert. Dans ce cas, pour la définition du plan de coupe $A_2$ selon la méthode explicitée ci-dessus en référence à la figure 25, la définition de la direction de référence $T'_R$ est réalisée, non pas à partir de la rosette cartésienne, mais à partir de la grille de vecteurs de contrainte, par projection normale du point $P'_5$ sur la grille de contraintes et définition d'un vecteur $D_1$ selon la méthode de pondération explicitée précédemment en référence à la figure 10. Le vecteur de référence $T'_R$ de la maille est ensuite obtenu par un transfert par projection normale de ce vecteur $D_1$ au point $P'_5$.

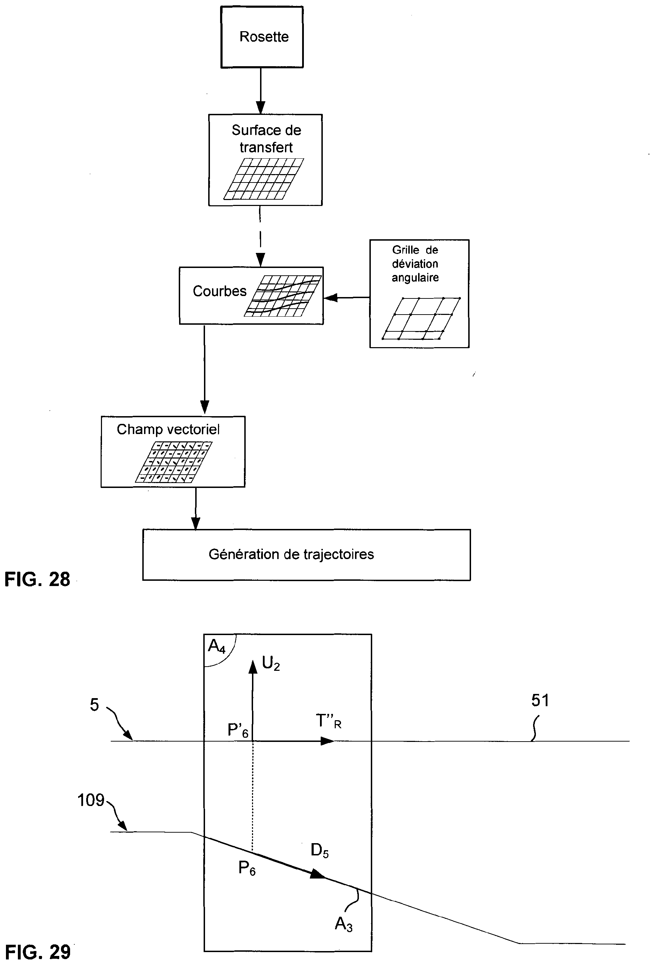

Selon un autre mode de réalisation illustré à la figure 28, le champ vectoriel est obtenu à partir d'une grille de déviation angulaire et d'une surface de transfert. Dans ce cas, pour la génération des courbes de contraintes selon la méthode explicitée ci-dessus en référence à la figure 19, la définition de la direction de référence $T_R$ pour chaque point de propagation $P_6$ est réalisée de la manière suivante, en référence à la figure 29 :

- définition d'un point projeté $P'_6$ obtenu par projection normale du point de propagation $P_6$ sur le maillage de transfert 5,
- définition d'une direction de référence $T''_R$ audit point projeté $P'_5$, ladite direction de référence provenant ici d'une rosette cartésienne et étant obtenue par transfert de l'axe X de la rosette sur le plan de la maille de transfert à laquelle appartient ledit point projeté $P'_6$;
- définition de la normale $U_2$ à la maille de transfert ;
- définition d'un plan de coupe $A_4$, ledit plan de coupe étant défini par le point projeté $P'_6$, la direction de référence $T''_R$ et la normale $U_2$,
- définition de la ligne d'intersection $D_5$ entre le plan de coupe $A_4$ et le plan $A_5$ de la maille, la direction de référence $T_R$ correspondant à la direction de cette ligne d'intersection.

La direction de propagation au point $P_6$ est ensuite obtenue tel que décrit précédemment en référence à la figure 19, en utilisant la valeur de déviation angulaire maximale obtenue à partir de la grille de déviation angulaire.

Selon autre mode de réalisation, le champ vectoriel est obtenu à partir d'une grille de vecteurs de contrainte, d'une grille de déviation angulaire et d'une surface de transfert. Dans ce cas, pour la définition du plan de coupe $A_4$ ci-dessus, la définition de la direction de référence $T''_R$ est effectuée, non pas à partir de la rosette cartésienne, mais à partir de la grille de vecteurs de contrainte, par projection normale du point $P'_6$ sur la grille de contraintes et définition d'un vecteur $D_1$ selon la méthode de pondération explicitée précédemment en référence à la figure 10. Le vecteur de référence $T''_R$ de la maille est ensuite obtenu par un transfert par projection normale de ce vecteur $D_1$ au point $P'_6$.

Selon d'autres modes de réalisation, tel qu'illustré à la figure 1, le champ vectoriel est obtenu à partir d'un maillage éléments finis FEM, comprenant des données de direction associées à chaque maille, tel qu'un maillage FEM provenant d'un logiciel de conception, par exemple le logiciel commercialisé sous la dénomination commerciale NASTRAN, avec au moins un angle associé à chaque maille, et une rosette associée audit maillage. Ce maillage FEM peut être utilisé directement en entrée du procédé selon l'invention, ou de préférence être transformé sous forme de grille de vecteurs ou de courbes de contraintes.

Par ailleurs, un champ vectoriel obtenu selon l'invention peut être réintroduit en entrée du procédé selon l'invention pour obtenir un nouveau champ vectoriel.

En fonction du type de surface de drapage, des champs vectoriels différents peuvent être utilisés pour la définition de trajectoires de plis d'orientations différentes. A titre d'exemple, en référence à la figure 28, trois champs vectoriels différents sont définis :

- champ vectoriel pour les plis à 0°
- champ vectoriel pour des plis à 90°
- champ vectoriel pour des plis à +/- 45°

L'utilisation de champ vectoriel permet d'effectuer rapidement des analyses de cisaillement, afin de vérifier que l'angle entre les trajectoires d'orientation différentes rentre bien dans une plage de valeur acceptable. Avantageusement, comme précédemment, les vecteurs directeurs des champs vectoriels sont tous définis pour une orientation à 0°. Dans le cas du champ vectoriel pour les plis à 90°, une rotation de 90° des vecteurs directeurs est effectuée pour générer des trajectoires à 90°. De même, dans le cas du champ vecteurs pour les plis à +/- 45°, une rotation de plus ou moins 45° des vecteurs directeurs est effectuée pour générer les trajectoires à +45° ou -45°. Ces différents champs vectoriels, avec des vecteurs directeurs définis pour une orientation à 0°, permet une comparaison rapide et aisée des vecteurs directeurs pour l'analyse de cisaillement.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Procédé de définition de trajectoires de fibre sur une surface de drapage pour la réalisation d'au moins un pli d'orientation théorique donnée, **caractérisé en ce qu'**il comprend :

    - la définition d'un maillage (9, 191) de la surface de drapage (9, 109),
    - la définition de données de direction associées à au moins une méthode de transfert,
    - la définition d'un champ vectoriel (1, 101, 301) en associant à chaque maille du maillage, au moins un vecteur directeur (11, 111, 311) obtenu par transfert desdites données de direction selon ladite méthode de transfert,

    la trajectoire d'une fibre étant définie à partir dudit champ vectoriel.

2. Procédé selon la revendication 1, **caractérisé en ce que** la définition de données de direction comprend la définition de courbes de contraintes (3, 303), et/ou la définition d'au moins une grille de contraintes (2) avec association à chaque noeud (N) de la grille de contraintes d'au moins un vecteur de contrainte (T), le vecteur directeur (11, 111, 311) d'une maille étant obtenu par calcul des poids normalisés ($w_5$, $w_6$, $w_{11}$, $w_{12}$) de vecteurs de contrainte ($T_5$, $T_6$ ; $T_{11}$, $T_{12}$) desdites courbes de contraintes (3, 303) et/ou par calcul des poids normalisés ($w_1$, $w_2$, $w_3$, $w_4$) de vecteurs de contrainte ($T_1$, $T_2$, $T_3$, $T_4$) de ladite grille de contraintes (2), et par pondération par lesdits poids normalisés desdits vecteurs de contrainte.

3. Procédé selon la revendication 2, **caractérisé en ce qu'**il comprend la définition d'une grille de contraintes (2), chaque maille de ladite grille de contraintes étant définie par quatre noeuds ($N_1$, $N_2$, $N_3$, $N_4$), et l'association à chaque noeud de la grille de contraintes d'au moins un vecteur de contrainte ($T_1$, $T_2$, $T_3$, $T_4$), le vecteur directeur (111) d'une maille étant obtenu par

    - définition d'un point projeté ($P'_1$) par projection normale d'un point d'analyse ($P_1$) de la maille sur la grille de contraintes,
    - calcul des poids normalisés au point projeté des quatre noeuds ($N_1$, $N_2$, $N_3$, $N_4$),
    - pondération des quatre vecteurs de contrainte ($T_1$, $T_2$, $T_3$, $T_4$) par lesdits poids normalisés pour obtenir un vecteur ($D_1$) au point projeté, et obtention du vecteur directeur (311) par projection normale de ce vecteur ($D_1$) au point d'analyse.

4. Procédé selon la revendication 2 ou 3, **caractérisé en ce qu'**il comprend la définition d'au moins deux courbes de contrainte, le vecteur directeur (311) d'une maille étant obtenu par

    - projection normale d'un point d'analyse ($P_2$, $P_5$) de ladite maille, sur les deux courbes de contraintes (31, 32 ; 331, 332) entre lesquelles ledit point d'analyse est positionné,
    - définition auxdits points projetés ($P'_2$, $P''_2$ ; $P'_4$, $P''_4$) de vecteurs de contrainte ($T_5$, $T_6$, $T_{11}$, $T_{12}$) tangents

auxdites courbes de contraintes
- calcul des poids normalisés des points projetés (P'$_2$, P"$_2$ ; P'$_4$, P"$_4$) au point d'analyse;
- et pondération des deux vecteurs de contrainte par leurs poids normalisés respectifs pour obtenir le vecteur directeur de la maille.

5. Procédé selon la revendication 4, **caractérisé en ce qu'**il comprend la définition d'une grille de déviation angulaire (4), chaque maille de ladite grille de déviation angulaire étant définie par quatre noeuds (N'), et l'association à chaque noeud de la grille de déviation angulaire d'au moins une valeur de déviation angulaire maximale, la définition d'une courbe de contraintes (303) comprenant la définition de directions de propagation en différents points d'analyse, la définition d'une direction de propagation en un point d'analyse (P$_3$) comprenant :

- l'obtention d'une première direction de référence (T$_R$) audit point d'analyse à partir de données de direction associées à une méthode de transfert,
- la projection normale dudit point (P$_3$) sur la grille de déviation angulaire,
- le calcul des poids normalisés (w$_7$, w$_8$, w$_9$, w$_{10}$) au point projeté (P'$_3$) des quatre noeuds (N'$_1$, N'$_2$, N'$_3$, N'$_4$) de la maille de la grille de déviation angulaire,
- la pondération desdites quatre valeurs de déviation angulaire maximale (V$_a$, V$_b$, V$_c$, V$_d$) de la maille par lesdits poids normalisés pour obtenir une valeur de déviation angulaire maximale ($\alpha$) associée audit point d'analyse,
- la réorientation de ladite de première direction de référence à partir de ladite valeur de déviation angulaire maximale ($\alpha$) pour obtenir la direction de propagation audit point d'analyse.

6. Procédé selon la revendication 5, **caractérisé en ce que** ladite étape de réorientation de la direction de référence comprend

- la définition d'un secteur de tolérance autour de la première direction de référence (T$_R$) en définissant des directions limites (L$_1$, L$_2$) à un angle de plus ou moins la valeur de déviation angulaire maximale ($\alpha$) associée audit point d'analyse,
- la détermination d'une direction géodésique (G) audit point d'analyse,
- la direction de propagation au point de propagation est égale à la direction géodésique si la direction géodésique (G) est incluse dans le secteur de tolérance, et est égale à la direction limite (L$_1$, L$_2$) la plus proche de la direction géodésique, si la direction géodésique n'est pas incluse dans le secteur de tolérance.

7. Procédé selon l'une des revendications 1 à 6, **caractérisé en ce qu'**il comprend la définition d'un maillage de transfert d'une surface de transfert correspondant à une surface simplifiée, sensiblement continue, de la surface de drapage, le vecteur directeur de chaque maille étant obtenue par

- définition d'un point projeté (P'$_5$, P'$_6$) obtenu par projection normale d'un point d'analyse (P$_5$, P$_6$) de ladite maille, sur le maillage de transfert (51),
- définition d'une deuxième direction de référence (T'$_R$, T"$_R$) audit point projeté (P'$_5$), à partir de données de direction associées à une méthode de transfert,
- définition de la normale (U$_1$, U$_2$) à la maille de transfert,
- définition d'un plan de coupe (A$_2$, A$_4$) ledit plan de coupe étant défini par le point projeté (P'$_5$, P'$_6$), ladite deuxième direction de référence (T'$_R$, T"$_R$) et ladite normale (U$_1$, U$_2$),
- définition de la ligne d'intersection (D$_4$, D$_5$) du plan de coupe (A$_2$, A$_4$) avec le plan (A$_3$, A$_5$) de la maille, le vecteur directeur de la maille étant obtenu à partir de la direction de cette ligne d'intersection.

8. Procédé selon la revendication 5 ou 6, en combinaison avec la revendication 3, **caractérisé en ce que** la première direction de référence (T$_R$) au point d'analyse (P$_3$) est obtenue à partir d'une grille de contraintes par

- définition d'un point projeté par projection normale dudit point d'analyse (P$_3$), sur la grille de contrainte,
- calcul des poids normalisés au point projeté des quatre noeuds,
- pondération des quatre vecteurs de contrainte par lesdits poids normalisés pour obtenir un vecteur (D$_1$) audit point projeté, la première direction de référence (T$_R$) étant obtenue par projection dudit vecteur au point d'analyse.

9. Procédé selon la revendication 7, en combinaison avec la revendication 5 ou 6, **caractérisé en ce que** la première direction de référence (T$_R$) au point d'analyse est obtenue à partir d'une surface de transfert, par

- définition d'un point projeté (P'$_6$) par projection normale du point d'analyse (P$_6$) de ladite maille, sur le maillage de transfert (51),

- définition d'une deuxième direction de référence (T"$_R$) audit point projeté (P'$_6$),
- définition de la normale (U$_2$) à la maille de transfert,
- définition d'un plan de coupe (A$_4$) ledit plan de coupe étant défini par le point projeté (P'$_5$), ladite deuxième direction de référence (T'$_R$) et ladite normale (U$_2$),
- définition de la ligne d'intersection (D$_5$) du plan de coupe (A$_4$) avec le plan (A$_5$) de la maille, la première direction de référence (T$_R$) correspondant à la direction de cette ligne d'intersection.

**10.** Procédé selon la revendication 7 ou 9, en combinaison avec la revendication 3, **caractérisé en ce que** la deuxième direction de référence (T'$_R$, T"$_R$) audit point projeté est obtenue à partir d'une grille de contraintes par

- définition d'un deuxième point projeté par projection normale du point (P'$_5$) de la maille de transfert, sur la grille de contrainte,
- calcul des poids normalisés au deuxième point projeté de la maille de la grille de contraintes des quatre noeuds de ladite maille,
- pondération des quatre vecteurs de contrainte par lesdits poids normalisés pour obtenir un vecteur (D$_1$) audit deuxième point projeté, la deuxième direction de référence (T'$_R$, T"$_R$) étant obtenue par projection dudit vecteur au point projeté de la maille de transfert.

**11.** Procédé selon l'une des revendications 1 à 10, **caractérisé en ce qu'**il comprend l'obtention d'au moins deux champs vectoriels pour des orientations de plis différentes, obtenus à partir de données de directions différentes, le procédé comprenant en outre une analyse de cisaillement par comparaison des vecteurs directeurs des deux champs vectoriels.

**12.** Procédé de fabrication de pièces en matériau composite par une machine de drapage de fibres automatique, **caractérisé en ce que** les trajectoires de fibre pour le drapage de plis par la machine de drapage sont définies par le procédé selon l'une des revendications 1 à 11.

## Patentansprüche

**1.** Verfahren zum Definieren von Fasertrajektorien auf einer Drapierungsoberfläche zur Erstellung mindestens einer Falte mit einer gegebenen theoretischen Ausrichtung, **dadurch gekennzeichnet, dass** es umfasst:

- die Definition eines Maschennetzes (9, 191) der Drapierungsoberfläche (9, 109),
- die Definition von Richtungsdaten, die mindestens einer Übertragungsart zugewiesen werden,
- die Definition eines Vektorfeldes (1, 101, 301) indem jeder Masche des Maschennetzes mindestens ein Richtungsvektor (11, 111, 311) zugewiesen wird, den man durch Übertragung der Richtungsdaten entsprechend der Übertragungsart erhält,

wobei die Trajektorie einer Faser ausgehend von dem Vektorfeld definiert wird.

**2.** Verfahren nach Anspruch 1, **dadurch gekennzeichnet, dass** die Definition der Richtungsdaten die Definition von Spannungskurven (3, 303) und/oder die Definition von mindestens einem Spannungsgitternetz (2) mit Zuweisung zu jedem Knoten (N) des Spannungsgitternetzes mindestens eines Spannungsvektors (T) umfasst, wobei man den Richtungsvektor (11, 111, 311) einer Masche durch Berechnung der normierten Gewichte (w5, w6, w11, w12) von Spannungsvektoren (T5, T6; T11, T12) der Spannungskurven (3, 303) und/oder durch Berechnung der normierten Gewichte (w1, w2, w3, w4) von Spannungsvektoren (T1, T2, T3, T4) des Spannungsgitternetzes (2), und durch Gewichtung der normierten Gewichte der Spannungsvektoren erhält.

**3.** Verfahren nach Anspruch 2, **dadurch gekennzeichnet, dass** es die Definition eines Spannungsgitternetzes (2) umfasst, wobei jede Masche des Spannungsgitternetzes durch vier Knoten (N1, N2, N3, N4), und die Zuweisung zu jedem Knoten des Spannungsgitternetzes mindestens eines Spannungsvektors (T1, T2, T3, T4) definiert wird, wobei der Richtungsvektor (111) einer Masche erhalten wird durch

- Definition eines projizierten Punktes (P'1) durch normale Projektion eines Analysepunktes (P1) der Masche auf das Spannungsgitternetz,
- Berechnung der normierten Gewichte am projizierten Punkt der vier Knoten (N1, N2, N3, N4),

- Gewichtung der vier Spannungsvektoren (T1, T2, T3, T4) durch die normierten Gewichte, um einen Vektor (D1) am projizierten Punkt zu erhalten, und Erhalt des Richtungsvektors (311) durch normale Projektion dieses Vektors (D1) am Analysepunkt.

4. Verfahren nach Anspruch 2 oder 3, **dadurch gekennzeichnet, dass** es die Definition von mindestens zwei Spannungskurven umfasst, wobei der Richtungsvektor (311) einer Masche erhalten wird durch

- normale Projektion eines Analysepunktes (P2, P5) der Masche, auf die beiden Spannungskurven (31, 32; 331, 332) zwischen denen der Analysepunkt positioniert ist,
- Definition an den projizierten Punkten (P'2, P"2; P'4, P"4) von an den Spannungskurven anliegenden Spannungsvektoren (T5, T6, T11, T12)
- Berechnung der normierten Gewichte der projizierten Punkte (P'2, P"2; P'4, P"4) am Analysepunkt;
- und Gewichtung der beiden Spannungsvektoren durch deren jeweilige normierten Gewichte, um den Richtungsvektor der Masche zu erhalten.

5. Verfahren nach Anspruch 4, **dadurch gekennzeichnet, dass** es die Definition eines Winkelabweichungsgitternetzes (4) umfasst, wobei jede Masche des Winkelabweichungsgitternetzes durch vier Knoten (N') definiert wird, und die Zuweisung zu jedem Knoten des Winkelabweichungsgitternetzes mindestens eines maximalen Winkelabweichungswertes,

wobei die Definition einer Spannungskurve (303) die Definition von Ausbreitungsrichtungen in verschiedenen Analysepunkten umfasst, wobei die Definition einer Ausbreitungsrichtung in einem Analysepunkt (P3) umfasst:

- den Erhalt einer ersten Referenzrichtung (TR) am Analysepunkt ausgehend von Richtungsdaten, die einer Übertragungsart zugewiesen werden,
- die normale Projektion des Punktes (P3) auf das Winkelabweichungsgitternetz,
- die Berechnung der normierten Gewichte (w7, w8, w9, w10) am projizierten Punkt (P'3) der vier Knoten (N'1, N'2, N'3, N'4) der Masche des Winkelabweichungsgittemetzes,
- die Gewichtung der vier maximalen Winkelabweichungswerte (Va, Vb, Vc, Vd) der Masche durch die normierten Gewichte, um einen maximalen Winkelabweichungswert ($\alpha$) zu erhalten, der dem Analysepunkt zugewiesen wird,
- die Neuausrichtung der ersten Referenzrichtung ausgehend von dem maximalen Winkelabweichungswert ($\alpha$), um die Ausbreitungsrichtung am Analysepunkt zu erhalten.

6. Verfahren nach Anspruch 5, **dadurch gekennzeichnet, dass** der Neuausrichtungsschritt der Referenzrichtung umfasst

- die Definition eines Toleranzsektors um die erste Referenzrichtung (TR) durch Definition der Grenzrichtungen (L1, L2) auf einen Winkel von mehr oder weniger den einen maximalen Winkelabweichungswert ($\alpha$), der dem Analysepunkt zugewiesen ist,
- die Bestimmung einer geodätischen Richtung (G) an dem Analysepunkt,
- die Ausbreitungsrichtung am Ausbreitungspunkt ist gleich der geodätischen Richtung, wenn die geodätische Richtung (G) in dem Toleranzsektor eingeschlossen ist, und ist gleich der der geodätischen Richtung nächstgelegenen Grenzrichtung (L1, L2), wenn die geodätische Richtung nicht in dem Toleranzsektor eingeschlossen ist.

7. Verfahren nach einem der Ansprüche 1 bis 6, **dadurch gekennzeichnet, dass** es die Definition eines Übertragungsmaschennetzes einer Übertragungsoberfläche entsprechend einer vereinfachten, im Wesentlichen kontinuierlichen, Oberfläche der Drapierungsoberfläche umfasst, wobei man den Richtungsvektor jeder Masche erhält durch

- Definition eines projizierten Punktes (P'5, P'6), den man durch normale Projektion eines Analysepunktes (P5, P6) der Masche auf das Übertragungsmaschennetz (51) erhält,
- Definition einer zweiten Referenzrichtung (T'R, T"R) am projizierten Punkt (P'5) ausgehend von Richtungsdaten, die einer Übertragungsart zugewiesen sind,
- Definition der Normalen (U1, U2) zu der Übertragungsmasche,
- Definition einer Schnittebene (A2, A4), wobei die Schnittebene durch den projizierten Punkt (P'5, P'6), die zweite Referenzrichtung (T'R, T"R) und die Normale (U1, U2) definiert wird,
- Definition der Kreuzungslinie (D4, D5) der Schnittebene (A2, A4) mit der Ebene (A3, A5) der Masche, wobei man den Richtungsvektor der Masche ausgehend von der Richtung dieser Kreuzungslinie erhält.

**8.** Verfahren nach Anspruch 5 oder 6, in Kombination mit dem Anspruch 3, **dadurch gekennzeichnet, dass** man die erste Referenzrichtung (TR) am Analysepunkt (P3) ausgehend von einem Spannungsgitternetz erhält durch

- Definition eines durch normale Projektion des Analysepunktes (P3) projizierten Punktes auf dem Spannungsgitternetz,
- Berechnung der normierten Gewichte am projizierten Punkt der vier Knoten,
- Gewichtung der vier Spannungsvektoren durch die normierten Gewichte, um einen Vektor (D1) am projizierten Punkt zu erhalten, wobei die erste Referenzrichtung (TR) durch Projektion des Vektors am Analysepunkt erhalten wird.

**9.** Verfahren nach Anspruch 7, in Kombination mit dem Anspruch 5 oder 6, **dadurch gekennzeichnet, dass** man die erste Referenzrichtung (TR) am Analysepunkt ausgehend von einer Übertragungsoberfläche erhält durch

- Definition eines durch normale Projektion des Analysepunktes (P6) der Masche projizierten Punktes (P'6) auf dem Übertragungsmaschennetz (51),
- Definition einer zweiten Referenzrichtung (T"R) am projizierten Punkt (P'6),
- Definition der Normalen (U2) zu der Übertragungsmasche,
- Definition einer Schnittebene (A4), wobei die Schnittebene durch den projizierten Punkt (P'5), die zweite Referenzrichtung (T'R) und die Normale (U2) definiert wird,
- Definition der Kreuzungslinie (D5) der Schnittebene (A4) mit der Ebene (A5) der Masche, wobei die erste Referenzrichtung (TR) der Richtung dieser Kreuzungslinie entspricht.

**10.** Verfahren nach Anspruch 7 oder 9, in Kombination mit dem Anspruch 3, **dadurch gekennzeichnet, dass** man die zweite Referenzrichtung (T'R, T"R) am projizierten Punkt ausgehend von einem Spannungsgitternetz erhält durch

- Definition eines zweiten durch normale Projektion des Punktes (P'5) der Übertragungsmasche projizierten Punktes auf dem Spannungsgitternetz,
- Berechnung der normierten Gewichte am zweiten projizierten Punkt der Masche des Spannungsgitternetzes der vier Knoten der Masche,
- Gewichtung der vier Spannungsvektoren durch die normierten Gewichte, um einen Vektor (D1) an dem zweiten projizierten Punkt zu erhalten, wobei man die zweite Referenzrichtung (T'R, T"R) durch Projektion des Vektors an dem projizierten Punkt der Übertragungsmasche erhält.

**11.** Verfahren nach einem der Ansprüche 1 bis 10, **dadurch gekennzeichnet, dass** es den Erhalt mindestens zweier Vektorfelder für Ausrichtungen unterschiedlicher Falten umfasst, die man ausgehend von unterschiedlichen Richtungsdaten erhält, wobei das Verfahren weiter eine Scheranalyse durch Vergleich der Richtungsvektoren der beiden Vektorfelder umfasst.

**12.** Verfahren zur Herstellung von Teilen aus Verbundmaterial durch eine automatische Faserdrapierungsmaschine, **dadurch gekennzeichnet, dass** die Fasertrajektorien für die Drapierung von Falten durch die Drapierungsmaschine durch das Verfahren nach einem der Ansprüche 1 bis 11 definiert werden.

**Claims**

**1.** Method for defining the trajectories of fiber on a layup surface for producing at least one ply having a given theoretical orientation, **characterized in that** it includes:

- the definition of a mesh (9, 191) of the layup surface (9,109),
- the definition of direction data associated to at least one transfer method,
- the definition of a vector field (1, 101, 301) by associating to each element of the mesh, at least one direction vector (11, 111, 311) obtained by transfer of said direction data according to said transfer method,

the trajectory of a fiber being defined from said vector field.

**2.** Method according to claim 1, **characterized in that** the definition of the direction data includes the definition of constraint curves (3, 303), and/or the definition of at least one constraint grid (2) with association of at least one constraint vector (T) to each node (N) of the constraint grid, the direction vector (11, 111, 311) of an element being obtained by the calculation of the normalized weights ($w_5$, $w_6$, $w_{11}$, $w_{12}$) of the constraint vectors ($T_5$, $T_6$ ; $T_{11}$, $T_{12}$) of said constraint curves (3, 303) and/or by calculation of the normalized weights ($w_1$, $w_2$, $w_3$, $w_4$) of the constraint vectors ($T_1$, $T_2$, $T_3$, $T_4$) of said constraint grid (2), and by weighting of said constraint vectors by said normalized weights.

3. Method according to claim 2, **characterized in that** it includes the definition of a constraint grid (2), each element of said constraint grid being defined by four nodes ($N_1$, $N_2$, $N_3$, $N_4$), and the association of at least one constraint vector ($T_1$, $T_2$, $T_3$, $T_4$) to each node of the constraint grid, the direction vector (111) of an element being obtained by

- definition of a projected point ($P'_1$) by normal projection of an analysis point ($P_1$) of the element on the constraint grid,
- calculation of the normalized weights, at the projected point, of the four nodes ($N_1$, $N_2$, $N_3$, $N_4$),
- weighting of the four constraint vectors ($T_1$, $T_2$, $T_3$, $T_4$) by said normalized weights to obtain a vector ($D_1$) at the projected point, and obtaining the direction vector (311) by normal projection of this vector ($D_1$) at the analysis point.

4. Method according to claim 2 or 3, **characterized in that** it includes the definition of at least two constraint curves, the direction vector (311) of an element being obtained by

- normal projection of an analysis point ($P_2$, $P_5$) of said element, on the two constraint curves (31, 32; 331, 332) between which said analysis point is positioned,
- definition, at said projected points ($P'_2$, $P''_2$ ; $P'_4$, $P''_4$), of the constraint vectors ($T_5$, $T_6$, $T_{11}$, $T_{12}$) tangent to said constraint curves
- calculation of the normalized weights of the projected points ($P'_2$, $P''_2$ ; $P'_4$, $P''_4$) at the analysis point;
- and weighting of the two constraint vectors by their respective normalized weights to obtain the direction vector of the element.

5. Method according to claim 4, **characterized in that** it includes the definition of an angular deviation grid (4), each element of said angular deviation grid being defined by four nodes (N'), and the association to each node of the angular deviation grid of at least one maximum angular deviation value, the definition of a constraint curve (303) comprising the definition of propagation directions at different analysis points, the definition of a propagation direction at an analysis point ($P_3$) including:

- obtaining a first reference direction ($T_R$) at said analysis point from the direction data associated to a method of transfer,
- the normal projection of said point ($P_3$) on the angular deviation grid,
- calculation of the normalized weights ($w_7$, $w_8$, $w_9$, $w_{10}$), at the projected point ($P'_3$), of the four nodes ($N'_1$, $N'_2$, $N'_3$, $N'_4$) of the element of the angular deviation grid,
- weighting of said four maximum angular deviation values ($V_a$, $V_b$, $V_c$, $V_d$) of the element by said normalized weights to obtain a maximum angular deviation value ($\alpha$) associated to said analysis point,
- the reorientation of said first reference direction from said maximum angular deviation value ($\alpha$) to obtain the propagation direction at said analysis point.

6. Method according to claim 5, **characterized in that** said step of reorientation of the reference direction includes

- the definition of a tolerance sector around the first reference direction ($T_R$) by defining direction limits ($L_1$, $L_2$) at an angle of more or less the maximum angular deviation value ($\alpha$) associated to said analysis point,
- determining a geodesic direction (G) at said analysis point,
- the propagation direction at the propagation point is equal to the geodesic direction if the geodesic direction (G) is included in the tolerance sector, and is equal to the direction limit ($L_1$, $L_2$) closest to the geodesic direction, if the geodesic direction is not included in the tolerance sector.

7. Method according to one of the claims 1 to 6, **characterized in that** it includes the definition of a transfer mesh of a transfer surface corresponding to a simplified surface, substantially continuous, of the layup surface, the direction vector of each element being obtained by

- definition of a projected point ($P'_5$, $P'_6$) obtained by normal projection of an analysis point ($P_5$, $P_6$) of said element, on the transfer mesh (51),

**16**

- definition of a second reference direction ($T'_R$, $T''_R$) at said projected point ($P'_5$), from direction data associated to a method of transfer,
- definition of the normal ($U_1$, $U_2$) to the transfer element,
- definition of a cutting plane ($A_2$, $A_4$) said cutting plane being defined by the projected point ($P'_5$, $P'_6$), said second reference direction ($T'_R$, $T''_R$) and said normal ($U_1$, $U_2$),
- definition of the line of intersection ($D_4$, $D_5$) of the cutting plane ($A_2$, $A_4$) with the plane ($A_3$, $A_5$) of the element, the direction vector of the element being obtained from the direction of this line of intersection.

8. Method according to claim 5 or 6 in combination with claim 3, **characterized in that** the first reference direction ($T_R$) at the analysis point ($P_3$) is obtained from a constraint grid by

- definition of a projected point by normal projection of said analysis point ($P_3$) on the constraint grid,
- calculation of normalized weights, at the projected point, of the four nodes,
- weighting of the four constraint vectors by said normalized weights to obtain a vector ($D_1$) at said projected point, the first reference direction ($T_R$) being obtained by projection of said vector at the analysis point.

9. Method according to claim 7, in combination with claim 5 or 6, **characterized in that** the first reference direction ($T_R$) at the analysis point is obtained from a transfer surface, by

- definition of a projected point ($P'_6$) by normal projection of the analysis point ($P_6$) of said element on the transfer mesh (51),
- definition of a second reference direction ($T''_R$) at said projected point ($P'_6$)
- definition of the normal ($U_2$) to the transfer element,
- definition of a cutting plane ($A_4$) said cutting plane being defined by the projected point ($P'_5$), said second reference direction ($T'_R$) and said normal ($U_2$),
- definition of the line of intersection ($D_5$) of the cutting plane ($A_4$) with the plane ($A_5$) of the element, the first reference direction ($T_R$) corresponding to the direction of this line of intersection.

10. Method according to claim 7 or 9, in combination with claim 3, **characterized in that** the second reference direction ($T'_R$, $T''_R$) at said projected point is obtained from a constraint grid by

- definition of a second projected point by normal projection of the point ($P'_5$) of the transfer element, on the constraint grid,
- calculation of the normalized weights, at the second projected point of the element of the constraint grid, of the four nodes of said element,
- weighting of the four constraint vectors by said normalized weights to obtain a vector ($D_1$) at said second projected point, the second reference direction ($T'_R$, $T''_R$) being obtained by projection of said vector at the projected point of the transfer element.

11. Method according to one of claims 1 to 10, **characterized in that** it includes obtaining at least two vector fields for different plies orientations, obtained from different direction data, the method further comprising a shear analysis by comparison of the direction vectors of the two vector fields.

12. Method for the manufacture of parts made of composite materials by an automatic fiber layup machine, **characterized in that** the fiber trajectories for the laying up of plies by the layup machine are defined by the method according to one of claims 1 to 11.

FEM

n courbes

grille de
vecteurs

Rosette

FEM

Surface de
transfert

Courbes

Grille de
déviation
angulaire

Champ vectoriel

Analyse

Génération de trajectoires

Analyse

sectorisation

**FIG. 1**

**FIG. 2**

**FIG. 3**

FIG. 4

FIG. 5

FIG. 7A

Analyse de courbure (m) - Trajectoires 90deg
Rosette Cartésienne

FIG. 7B

FIG. 6A

Analyse de courbure (m) – Trajectoires 0deg
Rosette Cartésienne

FIG. 6B

21

**grille de vecteurs**

**Champ vectoriel**

**FIG. 8**

**Génération de trajectoires**

9

91

93

92

93

P$_1$

92

N

N

2

21

P'$_1$

T

N

**FIG. 9**

FIG. 10

FIG. 11

FIG. 12

FIG. 13A

FIG. 14A

Analyse de courbure (m) - Trajectoires 0deg
Grille de vecteurs

FIG. 13B

Analyse de courbure (m) – Trajectoires 90deg
Grille de vecteurs

FIG. 14B

EP 3 000 001 B1

n courbes

Champ vectoriel

**FIG. 15**

Génération de trajectoires

**FIG. 16**

FIG. 17

FIG. 18

FIG. 19

FIG. 20

303

FIG. 21

331

332

301

311

**FIG. 22**

**Analyse de courbure (m) – Trajectoires 90deg
Grille de Déviation Angulaire**

**FIG. 23**

Rosette

Surface de transfert

Champ vectoriel

Génération de trajectoires

**FIG. 24**

$A_2$

$U_1$

5

51

$P'_5$    $T'_R$

109

$D_4$

$P_5$

195

194   191

$A_3$

**FIG. 25**

109

195

194

481

**FIG. 26A**

481

**FIG. 26B**

581

**FIG. 27**

**FIG. 28**

**FIG. 29**

```
┌──────────────────┐  ┌──────────────────┐  ┌──────────────────┐
│ Champ vectoriel  │  │ Champ vectoriel  │  │ Champ vectoriel  │
│       0°         │  │       90°        │  │     +/- 45°      │
└──────────────────┘  └──────────────────┘  └──────────────────┘
                      ┌──────────────────┐
                      │   Analyse de     │
                      │   cisaillement   │
                      └──────────────────┘
```

**FIG. 30**

**EP 3 000 001 B1**

**Documents brevets cités dans la description**

- US 5041179 A